(19) Europäisches Patentamt / European Patent Office / Office européen des brevets

(11) **EP 4 567 671 A1**

(12) # EUROPEAN PATENT APPLICATION

(43) Date of publication:
**11.06.2025 Bulletin 2025/24**

(21) Application number: **24171385.8**

(22) Date of filing: **19.04.2024**

(51) International Patent Classification (IPC):
**G06N 3/0464** (2023.01)    **G06N 3/084** (2023.01)
**G06N 10/60** (2022.01)    **G06V 10/36** (2022.01)

(52) Cooperative Patent Classification (CPC):
**G06N 3/0464; G06N 3/084; G06N 10/60;
G06V 10/774; G06V 10/82;** G06V 2201/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 EP 23214623**

(71) Applicant: **Kipu Quantum GmbH
76137 Karlsruhe (DE)**

(72) Inventors:
- **SIMEN, Anton
  10407 Berlin (DE)**
- **HEGADE, Narendra N.
  10439 Berlin (DE)**

- **MONTALBAN, Iraitz
  76137 Karlsruhe (DE)**
- **MICHON, Eric
  10437 Berlin (DE)**
- **FLORES-GARRIGOS, Carlos
  03003 Alicante (ES)**
- **VIVES-GILABERT, Yolanda
  03750 Pedreguer (ES)**
- **SOLANO, Enrique
  10405 Berlin (DE)**
- **MARTIN-GUERRERO, José D.
  46100 Burhassot (ES)**
- **KUMAR, Shubham
  10405 Berlin (DE)**

(74) Representative: **Sonnenberg Harrison
Partnerschaft mbB
Herzogspitalstraße 10a
80331 München (DE)**

(54) **QUANTUM DIGITAL-ANALOG CONVOLUTIONS FOR IMAGE CLASSIFICATION**

(57) The invention pertains to a computer-implemented method for method for image classification, comprising:
- Encoding data of an image into digital, single-qubit gates, wherein each pixel of an image is encoded into a single qubit;
- Applying analog blocks as convolutions to produce a latent representation of the image, wherein the analog blocks leverage native operations of a given quantum hardware to entangle the qubits;
- Measuring qubits individually and compute the expectation value of an observable from the probability distributions, which will be encoded into pixels, generating new images called as latent representation of the original image;
- Using multiple qubit connectivities on the analog blocks in order to detect different characteristics from the original image; and
- Training a classical Convolutional Neural Network with input images based on the latent representation.

Figure 3

EP 4 567 671 A1

**Description**

The invention relates to quantum computing. Specifically, regarding certain embodiments, the invention is defined by the appended independent claims. Other embodiments of the invention are defined in the dependent claims and are also described throughout the text.

The invention also relates to a computer-implemented method for enhancing image classification tasks by using digital-analog quantum computing (DAQC). In particular embodiments, the method is based on Digital-Analog Quantum Computing (DAQC).

**Short Description of the Invention**

This summary is provided to introduce a selection of concepts in a simplified form that are further described below in the detailed description and the examples. This summary is not intended to identify key features of the invention, nor is it intended to be used to limit the scope of the invention.

The object of the invention is to provide an improved method for image classification using a digital quantum computer.

This object is achieved by the present invention, for example by the features of the appended claims. Further embodiments and examples are apparent from the dependent claims, the detailed description, and the accompanying drawings of the figures.

In a first aspect, the invention pertains to a computer-implemented method for image classification (in particular of medical images) using a quantum computer comprising a quantum processing unit (QPU) with a plurality of qubits and a central processing unit (CPU).

In certain embodiments, the method for image classification comprises:

- Encoding an input image (an original image) into digital, single-qubit blocks in the form of digital, single-qubit gates in the QPU of the quantum computer, wherein each pixel of an input image is encoded into a single qubit from the plurality of qubits;

- Using analog blocks provided by the QPU of the quantum computer (as native) to create entanglement among the qubits;

- Generating a new image (also referred to as a "latent representation") of the (original) input image. This step may comprise:

    a) Using single or multiple digital analog quantum kernels (DAQK) by varying the topologies of the entangled qubits, and
    b) measuring an observable of each qubit of the plurality of entangled qubits individually and computing an expectation value from the measured observable, in particular from probability distributions, wherein the measured observable is encoded into pixels of the new image to allow for the detection of different characteristics of the original image. The detected characteristics are present on the new generated images. For example, a particular convolution can detect circular edges in the original image. It leads to a new image where the circular edges are highlighted. Several other more complex characteristics can be detected by a convolution; and

- Providing the new image as input to train a machine learning model, such as a classical Convolutional Neural Network (CNN) to classify the original input image using the detected characteristics of the original input image. The CNN is trained with the new images generated by the quantum convolutions.

Once the CNN is trained, the trained CNN is used in the method to classify the input images. For that purpose, the new images are provided to the CNN as input and the CNN is run as described herein.

The use of analog blocks provided by the QPU of the quantum computer as native allows to create entanglement among the plurality of qubits. Ion certain embodiments, all the qubits are being entangled. In other embodiments, only a fraction of the qubits are being entangled.

Varying the topologies of the entangled qubits may be done by applying multiple digital-analog quantum kernels (DAQK) to convolve the original input images. A single DAQK is responsible to generate a set of new, convolved images, from one of the original input images. Applying multiple DAQKs by varying the topology of the entanglement of the DAQK generates a large number of convolved images.

Single or multiple digital analog quantum kernels (DAQK) are used which leads to the generation of a larger number of new, convolved images. This leads to an increased detection of characteristics.

Using single or multiple digital analog quantum kernels (DAQK) and varying the topologies of the entangled qubits are interconnected, because each DAQK has a different entanglement topology.

In certain embodiments, the method comprises training the classical Convolutional Neural Network with a training set of images wherein the training images are convolved using DAQKs. The training set of images may contain 2 to 50 images, in particular 5 to 30, for example 10 to 15 input images.

In certain embodiments, the convolving of the training images using DAQKs comprises one or more of the following steps a to g:

a. Using at least one digital-analog quantum kernel as the main component for processing image data using quantum circuits. Unlike traditional convolutional neural networks (CNNs) that use trainable matrices as kernels, this approach utilizes digital-analog quantum circuits.

b. Performing a Quantum Convolution: The quantum kernel performs convolutions on images from a training set. This involves processing the image data through quantum circuits designed specifically for convolutional operations.

c. Measurement of a Quantum Circuit: After the convolution operation is performed on the quantum circuits, the next step involves measuring the quantum circuit. Measurements collapses the quantum state of each qubit, resulting in an observable value.

d. Expectation Value of a Single-Body Observable: From each measured qubit, an expectation value of a single-body observable is obtained.

e. Encoding Information into New Pixels: The expectation values obtained from the measured qubits are then encoded into new pixels. These new pixels constitute the convolved images.

f. Responsibility of Each Qubit: Each qubit measured in the quantum circuit is responsible for generating specific convolved images. The expectation values obtained from the measurement of each qubit contribute to the creation of the convolved images.

g. Applying Multiple Circuits: Additionally, in certain embodiments, more than one quantum circuit is applied by varying the entanglement topology. This variation in the entanglement topology leads to the generation of multiple convolved images, each reflecting a different aspect or feature of the input image data.

By following the above-given steps, the digital-analog quantum kernel effectively performs convolutions on image data, leveraging quantum circuits and measurement processes to encode information into new pixels and generate convolved images.

The same sequence may be used to conceive the input image.

In certain embodiments, convolving the training images using DAQKs comprises the steps of scanning each image from a training set with DAQK in order to generate the new, i.e. convolved images. The number of new images grows with the number of qubits measured as well as the number of DAQKs used.

In certain embodiments, the analog blocks include multi-qubit interactions native to the quantum processing unit (QPU).

In certain embodiments of the method, the digital, single-qubit blocks are generated using electromagnetic pulses. This can be done by applying the pulses on the qubits individually. This operation changes the state of the qubits and it is equivalent to a single-qubit quantum gate.

In certain embodiments of the method, a quantum digital block, for example realized by single-qubit rotations, and/or an analog block is implemented over a kernel size of nxn, wherein n is the number of rows or column of the kernel and corresponding to a specific number of qubits in a quantum layer is $nxn = n^2$.

In certain embodiments, the method comprises:

Convolving a portion of the input image in the form of input pixels in the quantum computer by applying at least one convolving layer of the pixels to subgroups of the plurality of input qubits, wherein the size of each subgroup of the plurality of input qubits is equal to the number of pixels of the image portion.

In certain embodiments, the method comprises performing a measurement of the state of at least some of the qubits on which a digital analog quantum convolutional layer was applied. The number of qubits measured dictates the number of convolved images generated by each original image.

In certain embodiments of the method, the quantum computer on which the method is performed uses neutral atoms, trapped ions, superconducting circuits and/or photons.

In a second aspect, the invention pertains to a data processing apparatus/device/system comprising means for carrying out [the steps of] the method described herein.

In certain embodiments, the invention refers to a data processing system (which may also be referred to as an image classification system) comprising means for carrying out [the steps of] the method described herein, in particular comprising:

- A quantum processor (in particular a quantum processing unit (QPU)) configured to implement digital-analog quantum convolutions whose analog part is native to a quantum computer used, in particular to a neutral atom quantum computer;
- A memory storing instructions for applying a quantum operation derived from a Hamiltonian, in particular from a Rydberg Hamiltonian to images, in particular medical images;
- A classical processor configured to receive quantum measurement data and integrate it with a classical convolutional neural network for image classification; and/or
- An output interface configured to display classification results based on the quantum-processed images, in particular medical images.

In certain embodiments, the invention refers to a data processing system, wherein the digital-analog blocks are configured for entanglement patterns that enhance the convolution of input data for the extraction of particular features.

In a third aspect, the invention pertains to a computer program [product] comprising instructions which, when the program is executed by a computer, cause the computer to carry out [the steps of] the method described herein.

In a fourth aspect, the invention pertains to a computer-readable [storage] medium comprising instructions which, when executed by a computer, cause the computer to carry out [the steps of] the method described herein.

In a fifth aspect, the invention pertains to the use of the method as described herein for classifying a medical input image as showing a malignant cancer or not.

In a sixth aspect, the invention pertains to the use of a plurality of quantum generated images, in particular as described above and herein, for training a classical Convolutional Neural Network (CNN) for image classification.

Other features and advantages of the invention will be apparent upon reading the detailed description and examples and reviewing the accompanying drawings of the figures.

## Detailed Description of the Invention

The object of the invention is to provide an improved method for image classification.

Various embodiments of the invention are further described in more detail with reference to the accompanying drawings. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

In a first aspect, the invention pertains to a computer-implemented method for image classification using a quantum computer with a quantum processing unit (QPU) and a plurality of qubits and a central processing unit (CPU). In certain embodiments, the method comprises one or all of the following steps:

- Encoding an input image into digital, single-qubit blocks in the QPU of the quantum computer, wherein each pixel of an input image is encoded into a single qubit from the plurality of qubits;
- Using analog blocks provided by the QPU of the quantum computer as native to create entanglement among the qubits;
- Generating a new image of the input image, comprising

    a) using single or multiple digital analog quantum kernels (DAQK) by varying the topologies of the entangled qubits, and
    b) measuring an observable of each qubit of the plurality of entangled qubits and computing an expectation value from the measured observables which is encoded into pixels of the new image; and

- Providing the new image as input to a classical Convolutional Neural Network to classify the input image.

The invention refers to a method for the implementation of entangled digital analog quantum kernels (DAQK) using analog quantum blocks, leveraging native operations of quantum hardware (neutral atoms). This method overcomes the challenges associated with creating and maintaining entanglement by harnessing the inherent capabilities of quantum processors. Analog quantum blocks, inherent to the quantum hardware, allow for the application of highly entangled states with enhanced fidelity. By aligning with the native operations of the hardware, the method enhances the efficiency and practicality of integrating entanglement into quantum-assisted Convolutional Neural Networks. This method does not only address the limitations posed by the difficulty of implementing fully entangled circuits, but also unlocks the true potential of quantum-enhanced feature extraction for image classification tasks.

Image classification is a pattern recognition that assigns categories to images based on the contextual information derived from their content. This approach is based on the significance of the spatial relationships between pixels, particularly those within a specified neighborhood. By analyzing these relationships, the method aims to utilize the contextual information, e.g., the texture, patterns, and shapes found in the image, to accurately classify an image into one of several predefined categories or sub-populations. Classification in the context of the invention is the problem of identifying which of a set of categories or sub-populations an observation belongs to.

In the realm of image classification, the process is mathematically underpinned by transforming the input image, represented as a matrix or tensor $I \in R^{W \times H \times C}$ for an image with width $W$, height $H$, and $C$ color channels, through a series of computational steps. Convolutional layers utilize kernels $K$ to perform convolutions across the image, producing feature maps $F(x, y) = \Sigma_{i,j} I(x - i, y - j) \cdot K(i, j)$, where $(i, j)$ spans the kernel dimensions, effectively capturing spatial relationships and patterns within the image. Non-linearity is introduced via activation functions, such as ReLU, applied to these feature maps, $F' = \sigma(F)$, to enable the learning of complex patterns where $F'$ is the output feature map after applying the activation function $\sigma$ to the input feature map $F$. Optional pooling operations, like max pooling $P(x, y) = \max\limits_{(i,j) \in N(x,y)} F'(i, j)$, reduce feature map dimensions, aiding in computational efficiency and resistance to overfitting. The culmination of this process is a classifier, often a softmax function in the final layer, that outputs a probability distribution over classes, $S(z_i) = \dfrac{e^{z_i}}{\Sigma_j e^{z_j}}$, for features $z$. Training of this architecture is achieved by minimizing a loss function, commonly cross-entropy $L(y, S(z)) = -\Sigma_i y_i log(S(z_i))$, comparing the predicted probabilities $S(z)$ to the actual labels $y$, through backpropagation and optimization algorithms like SGD or Adam. This mathematical framework underlies the capability of CNNs to classify images by learning from the complex interplay of pixels' spatial relationships.

A neutral atom quantum computer is a modality of quantum computers built out of Rydberg atoms. To perform computation, the atoms are trapped in a magneto-optical trap. Qubits are then encoded in the energy levels of the atoms. Initialization and operation of the computer is performed via the application of lasers on the qubits. The laser can accomplish, for example, arbitrary single qubit gates and a CZ gate for universal quantum computation. The CZ gate is carried out by leveraging the Rydberg blockade which leads to strong interactions when the qubits are physically close to each other. To perform a CZ gate a Rydberg $\pi$ pulse is applied to the control qubit, a $2\pi$ on the target qubit and then a $\pi$ on the control. Measurement is enforced at the end of the computation with a camera that generates an image of the outcome by measuring the fluorescence of the atoms.

A trapped-ion quantum computer is one in which ions, or charged atomic particles, are confined and suspended in free space using electromagnetic fields. Qubits are stored in stable electronic states of each ion, and quantum information can be transferred through the collective quantized motion of the ions in a shared trap. For single qubit operations, lasers are applied to induce coupling between the qubit states or, for entanglement between qubits, coupling between the internal qubit states and the external motional states.

The invention involves digital quantum gates along with analog or native quantum gates to improve the accuracy of image classification.

Digital gates (also referred to as blocks) are realized in quantum hardware using electromagnetic pulses. For example, in trapped ion processors, lasers are used, in superconducting hardware microwave pulses are used and in neutral atoms optical tweezers and laser pulses are used.

Analog gates (blocks) are native to the hardware, i.e. they are hardware specific. For example, Ising spin interactions are available natively in trapped ion quantum hardware devices, and neutral atom quantum hardware devices. Furthermore, superconducting circuit-based devices can have $\sigma_i^k \sigma_j^l$ type of interactions, where $\sigma_i^k$ are Pauli matrices where $k = x$, $y$ or $z$.

The optimal combination of the digital and analog gates produces a shallower circuit depth for a specific problem and improved accuracy. Moreover, it shows improved performance over classical models.

For improving image classification in Convolutional Neural Network (CNN) models, classical data is encoded into digital, single-qubit gates (i.e. each pixel is encoded into a single qubit) and, subsequently, analog blocks are applied as convolutions to produce new images as latent representation of the original image, capturing complex relationships between the features by entangling the qubits.

In the method, digital-analog blocks are used to produce highly entangled quantum circuits instead of purely digital circuits. Since the digital-analog blocks are native to the hardware, they present a substantially higher fidelity to its digital counterpart, since the digital implementation would require a large number of two-qubit interactions. The digital implementation for a similar operation would lead to a large circuit depth beyond the coherence time of the current generation of quantum computers.

The invention may involve machine learning in certain embodiments.

Applications of the invention include image classification problems, such as medical image diagnosis and healthcare in general, object detection, and several other pattern recognitions from images. The invention can be applied in finance, for instance, for recognizing counterfeit banknotes. It can also be applied in signal pattern recognition. The example below refers to medical image recognition as a possible application of the method of the invention.

Definitions

Quantum computing: It is a field of computation, which aims at outperforming classical computation by exploiting quantum mechanical phenomena. In this regard, it is necessary to introduce a qubit, which is a basic unit of quantum information.

Qubit: The qubit may be considered as the quantum analog of a classical bit. It is representative of a physical system that may be in two different states, generally denoted by |0) and 11), as well as in a superposition of those two states, e.g., $\frac{|0\rangle+|1\rangle}{\sqrt{2}}$. This plays an important role in the development of quantum algorithms outperforming classical algorithms. One example of the physical device that may be used as a qubit is an electron spin.

Unitary operation: The time evolution of qubits is specified by a unitary operator acting on qubit states. The unitary operator plays the role of a gate in the quantum computing. In general, these gates are generated via some Hamiltonian that makes a qubit system to evolve in time.

Quantum circuit: A quantum circuit is a model for quantum computation in which a computation is a sequence of quantum gates, which are reversible transformations on a quantum mechanical analog of an n-bit register. This register consists of n qubits.

Circuit depth: It is defined as the number of parallel unitary operations that can be performed for a given algorithm to run on a given quantum hardware.

Coherence time: It is the duration over which a quantum system, such as a qubit in a quantum computer, maintains its quantum state without significant decoherence. Decoherence is the process by which a quantum system loses its quantum mechanical properties, typically due to interactions with its external environment, leading to the loss of superposition and entanglement. Coherence time sets a limit on the time available to perform quantum operations or computations before the quantum information is degraded.

Hamiltonian and k-local terms: A Hamiltonian is an operator representing the total energy of a quantum system, essential for describing the system's evolution over time. Particularly relevant are k-local Hamiltonians, where each term in the Hamiltonian involves interactions among at most k qubits. This concept is crucial in the realm of quantum simulations and algorithms, as it realistically models physical systems which typically exhibit local interactions. For instance, a 2-local Hamiltonian includes terms that describe interactions between pairs of qubits but not three or more simultaneously.

Pauli operators: are represented by three 2x2 matrices, known as the Pauli matrices, each corresponding to a different quantum spin direction (x, y, and z) for a qubit. The operators and their matrices are as follows:

$$\sigma_x = \begin{bmatrix} 0 & 1 \\ 1 & 0 \end{bmatrix}, \sigma_y = \begin{bmatrix} 0 & -i \\ i & 0 \end{bmatrix}, \sigma_y = \begin{bmatrix} 1 & 0 \\ 0 & -1 \end{bmatrix}$$

Rydberg Hamiltonian: A well-known way to implement time-dependent multi-body quantum Hamiltonian operations is through Rydberg atoms, where dipole-dipole interactions can be mapped to spin Hamiltonians which has also been proposed for learning tasks. This Hamiltonian can be written as

$$H_{ryd}(t) = \frac{\Omega(t)}{2}\left(\cos\phi(t)\sum_i \sigma_i^x - \sin\phi(t)\sum_i \sigma_i^y\right) - \Delta(t)\sum_i \eta_i + \sum_{<ij>} J_{ij}\eta_i\eta_j.$$

Where $\sigma_i^{x(y)}$ are Pauli matrices, $\Omega(t)$ is the Rabi frequency, $\Delta(t)$ is the detuning of the energy levels and $\eta_i = I - \sigma_i^z$

where I is the identity matrix.

Expectation value: It is the average of the measurable quantity of a quantum system which can include the energy, momentum or other dynamical quantity. It is obtained by the following relation

$$\frac{\langle \psi(t)|O(t)|\psi(t)\rangle}{|\langle \psi(t)|\psi(t)\rangle|^2}.$$

wherein $O(t)$ is the time dependent (or maybe independent) operator of interest and $\psi(t)$ is the time dependent wavefunction of the quantum system that determines its state at a particular time t.

Neutral atoms quantum computer: Neutral atom quantum computers utilize individual neutral atoms as qubits, controlled and manipulated using lasers and magnetic fields in ultra-high vacuum environments. This approach leverages the weak interaction of neutral atoms with electric fields to minimize environmental noise and decoherence, a major challenge in quantum computing. By trapping and cooling atoms to near absolute zero, initializing their quantum states, and precisely executing quantum logic gates through laser-induced interactions, these systems can perform complex computations that exploit quantum mechanics unique properties, such as superposition and entanglement. Neutral atom quantum computers promise scalability, long coherence times, and high-fidelity operations, positioning them as a compelling platform for advancing quantum computing's capabilities in solving problems beyond the reach of classical computers.

Quantum gate: A quantum gate is a fixed unitary evolution. An example is a multi-qubit operation:

$$U_N = e^{i\pi/4}\sigma_1^z \sigma_2^z \tag{1}.$$

Analog block: An analog block is a parametrized entangling unitary evolution with more than one parameter. An example is a two-parameter-dependent multiqubit operation in trapped ions (global MS gate) as

$$U_{MS}^n(\theta, \phi) = e^{-i\frac{\theta}{4}(\cos\phi\, S_x + \sin\phi\, S_y)^2} \tag{3}.$$

Where $S_{x(y)} = \sum_i \sigma_i^{x(y)}$. In this invention, we make use of the Neutral atom quantum computers that offer analog blocks in the form of the Rydberg Hamiltonian unitary $e^{-i\int_0^T H_{ryd}(t)dt}$.

Digital block:

A digital block is a fixed unitary evolution up to a set of local rotations upto 2-qubits. The examples are parameter-fixed entangling quantum gates and single qubit rotations with arbitrary angles as

$$U_N(\phi) = \left(e^{i\phi_1\sigma_1^z} \otimes e^{i\phi_2\sigma_2^z}\right)e^{i\pi/4}\sigma_1^z\sigma_2^z, \text{ and} \tag{2}.$$
$$U_i(\phi) = e^{i\phi\sigma_1^z}.$$

Trotterization: It is a technique used in quantum computing to simulate the evolution of quantum systems governed by Hamiltonians that are sums of non-commuting terms. It breaks down the exponential of a sum of operators into a product of exponentials of these operators, as $e^{(A+B)t} \approx \left(e^{\frac{At}{n}}e^{\frac{Bt}{n}}\right)^n$, allowing for an approximate simulation of the quantum system's dynamics. Here, $A$ and $B$ are, generally, non-commuting operators, $t$ represents time, and $n$ is the number of subdivisions or steps in the approximation. As $n$ approaches infinity, this approximation becomes exact. This method is based on the Trotter-Suzuki formula, which provides a way to approximate the evolution operator of the entire system through a sequence of simpler operations that are easier to implement on a quantum computer.

Methods of quantum computing: Among the approaches to do quantum computing, there are mainly two, analog and digital methods. The analog method aims to design the hardware to mimic a certain problem (Hamiltonian). While being high in accuracy, it has the disadvantage that it is specific to a given problem and lacks flexibility. In digital quantum computation (DQC), the digital quantum gates (single and two-qubit) are used to tune the hardware to reach a certain target Hamiltonian.

An alternative approach is Digital-Analog Quantum Computing (DAQC), which uses single and two qubit gates as digital blocks and multi-qubit gates as analog blocks aiming to solve the problem with fewer resources (reduced circuit depth) than is required by DQC. Moreover, due to reduced circuit depth it incurs less error in the simulation compared to the DQC paradigm and is more accurate.

Noisy intermediated scale (NISQ) devices: It refers to the current generation of quantum computers that are characterized by their relatively small number of qubits and the presence of noise and errors in their operations.

Problem encoding: Encoding a problem in quantum computing refers to the process of translating a specific computational problem or algorithm into a form that is suitable for a quantum computer to execute.

Neural network: A neural network, is a computational model inspired by the network of neurons in the human brain. It's designed to recognize patterns and solve complex problems in a way that mimics human thought processes. It consists of layers of nodes or neurons each of which can receive input, process it, and pass on output to subsequent layers. The basic structure includes an input layer, one or more hidden layers, and an output layer. Each neuron in a layer is connected to neurons in the next layer through "weights," which are adjusted during the training process to minimize the difference between the network's output and the desired output. This training process typically involves feeding the network a large amount of data so it can learn the relationships between inputs and outputs, a process known as "learning."

Convolutional neural networks: Convolutional Neural Networks (CNNs) have emerged as powerful tools for image classification tasks. These neural networks are specifically designed to process visual data, mimicking the human visual system's hierarchical organization. CNNs employ convolutional layers to automatically learn and extract relevant features from input images, capturing spatial hierarchies and patterns. This feature extraction is followed by pooling layers that downsample the spatial dimensions, reducing computational complexity while retaining essential information. The final layers typically consist of fully connected layers for classification. During the training process, CNNs adjust their parameters through backpropagation, optimizing their ability to recognize and classify patterns in images. The success of CNNs in image classification tasks can be attributed to their ability to automatically learn and hierarchically represent complex features, making them integral in various applications, from facial recognition to medical image analysis.

Quantum Convolutional neural networks: At the intersection of quantum computing and image classification, recent studies have explored the integration of quantum layers as a preprocessing step in Convolutional Neural Networks (CNNs). In these approaches, quantum layers are employed to encode image data into a quantum representation, leveraging quantum superposition and entanglement. This quantum-encoded latent representation is then fed into classical CNN layers for subsequent processing and classification. Such hybrid architectures aim to harness the computational advantages of quantum systems for certain data encoding tasks, potentially offering improvements in feature representation and subsequently enhancing the overall performance of image classification models. However, the implementation of fully entangled quantum circuits presents a challenge due to the increased complexity and resource demands. Achieving and maintaining entanglement across multiple qubits is a complex task, often requiring precise control and error-correction mechanisms. This difficulty in realizing fully entangled quantum circuits poses a practical limitation on the scalability and widespread applicability of quantum enhanced CNNs.

Image Classification: Image classification is a fundamental task in the field of computer vision that involves categorizing images into predefined classes or labels. The goal is to train a model that can accurately identify the class of new, unseen images based on the features learned during the training process. This process is widely used in various applications, such as facial recognition systems, medical image analysis, autonomous vehicles, and many more.

Kernel: A kernel is a function used to transform the input data into a higher-dimensional space. This transformation makes it easier to find a linear separation between different classes of data in case they are not linearly separable in the original space. Common examples include the linear kernel, polynomial kernel, and radial basis function (RBF) kernel. Kernels help in dealing with complex, non-linear relationships without explicitly computing the coordinates in a higher-dimensional space, thus saving computational resources.

CNN Kernel: A CNN (Convolutional Neural Network) kernel, also known as a filter or feature detector, is a fundamental component used in the convolutional layers of a CNN architecture. The kernel is essentially a small matrix of weights that slides (or convolves) over the input data (e.g., an image) to perform feature extraction by applying a dot product between the kernel and the local region of the input it covers at each position.

Quantum Kernel: In quantum machine learning, a quantum kernel is the quantum analog of these classical kernels. The idea is to use a quantum computer to project classical data into a quantum feature space (i.e., the state space of a quantum system) and then to compute the similarity between these quantum states. This approach can potentially exploit the high-dimensional state space of quantum systems to achieve better performance on certain tasks than classical kernel methods.

Digital analog quantum kernels (DAQK): In this context, digital analog quantum kernels (DAQK) are a combination of single-qubit digital gates - which encode classical information, analog blocks for entangling the qubits and measurements in the computational basis, which serve as information to classical CNN.

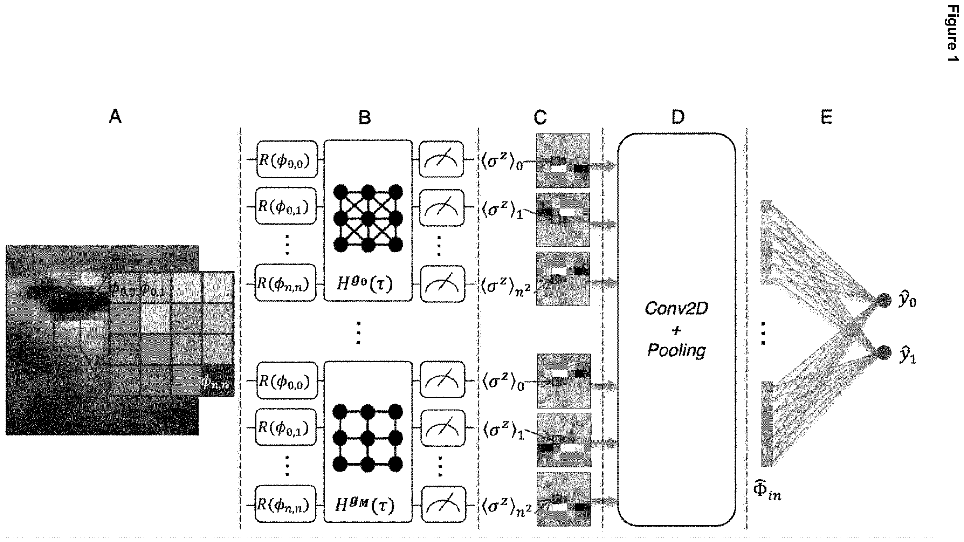

Single-DAQK: Uses a single entangling map for generating the new images. In Fig. 1, for example, it would represent only one of the multiple circuits shown. The number of quantum-generated images is restricted by the number of qubits.

Multi-DAQK: Uses multiple entangling maps for generating the new images. In Fig. 1, ifor example, t would represent all the multiple circuits shown. The number of quantum-generated images is restricted by the number of qubits multiplied by the number of different entangling maps.

Entangling map: An entangling map in the context of quantum information and quantum computing refers to a quantum operation that takes a separable (i.e., non-entangled) state of two or more quantum systems and transforms it into an entangled state. Entanglement is a fundamental property of quantum mechanics, where the states of two or more quantum systems become intertwined in such a way that the state of one system cannot be described independently of the state of the others, even when the systems are spatially separated.

Model Complexity: It is defined as the complexity of the function in the output layer of the machine learning model. This is characterized by the number of terms in the output layer. It helps to fit more complex data.

Topology of entangled qubits: It refers to a particular geometry or graph formed by entangled qubits as in Fig.1.

Quantum layer: This refers to a component within a quantum neural network (QNN) or a hybrid quantum-classical machine learning model. In these contexts, quantum layers operate similarly to layers in classical neural networks but process and transform information using quantum mechanics principles.

**Figures**

**Figure 1:** Convolutions with single and multi-DAQK (digital analog quantum kernels). The figure illustrates a digital-analog quantum convolution applied to the original (input) image. (A) the original image with highlighted target pixels denoted as $\Phi = \{\phi_{0,0}, \phi_{0,1} \ldots \ldots \Phi_{n,n}\}$, where the convolution will take place. These $n^2$ pixels undergo DAQK (B), composed by single-qubit rotations, $R(\phi_{i,j})$, analog blocks, $H^{gi}(\tau)$, and measurements in the computational basis. One or more analog blocks $H(\tau)$ with different graph connectivity, **g,** can be applied (single and multi-DAQK, respectively). (C) Expectation values of single-body observables, $\langle\sigma^z\rangle_i$, are computed, which will be utilized in generating new images with reduced dimensions. (D) The quantum-generated images go through standard convolutional and pooling layers, from where the resulting images are (E) flattened as an input vector, $\hat{\Phi}_{in}$, and passed to a dense trainable layer whose outputs, $\hat{y}_0$, and $\hat{y}_1$, estimate the target binary variables.

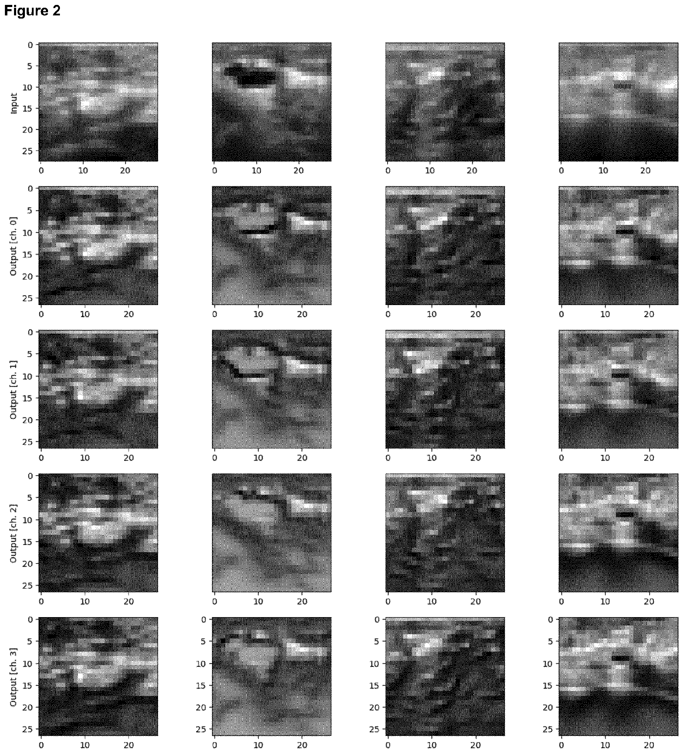

**Figure 2:** Hyperparameters and layers: The kernel size employed was 2x2 (corresponding to 4 qubits in the case of the quantum layer), with a stride of 2 (the kernel is applied by skipping 2 pixels at a time). The pixel values traverse through the digital-analog quantum circuit, and the expected value of an observable in each qubit (channel) is individually measured. These values are then stored in new images (4 new images, as 4 qubits were measured, as showed in Figure 2). Subsequently, these 4 new images are flattened and passed through a classical dense neural network with 2 fully-connected hidden layers. The classical counterpart contains the same configuration, except that a classical convolutional layer is applied in the raw image instead of a quantum one.

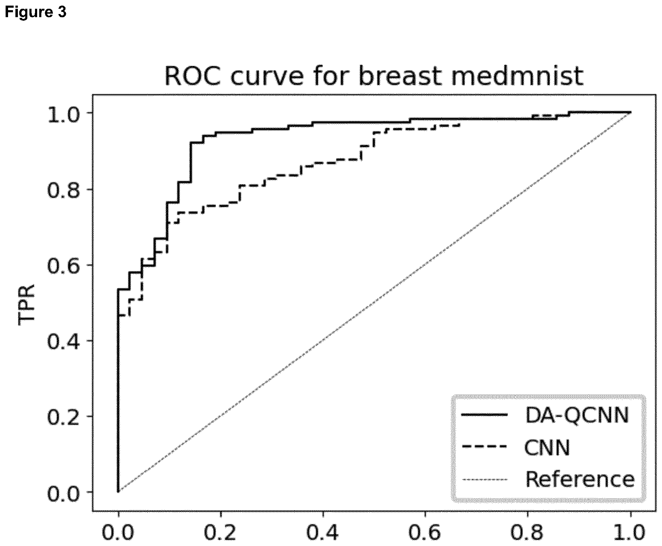

**Figure 3:** To assess the method's performance and compare it with the results of a public benchmark, the evaluated metrics included Area Under the ROC Curve (AUC) and test accuracy (ACC). Figure 3 illustrates the ROC curve, and Table 1 presents the method performances. It can be observed that the method of the invention using a digital-analog quantum layer outperforms the values obtained from a benchmark available on the MedMNIST website.

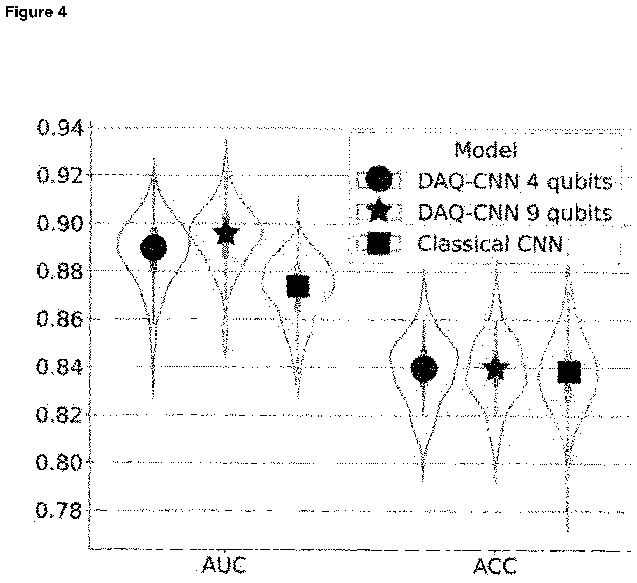

**Figure 4:** Statistical results to demonstrate the robustness of the digital-analog quantum method compared to its equivalent classical. The violin plot shows results for AUC and test ACC. The quantum kernels used were with size of 2x2 and 3x3 (4 and 9 qubits, respectively). Also, for these simulations were created four different quantum kernels for each case, by varying the qubit connectivity.

**Examples**

Dataset preparation and selection: The computational experiments were conducted using publicly available datasets of medical images, specifically the MedMNIST dataset. In particular, data was utilized for breast cancer classification, where the images have dimensions of 28x28 pixels. A total of 546 data points were used for training, 156 for testing, and 78 for validation.

Application of Digital-Analog Blocks: The quantum circuit employs digital-analog blocks, native to neutral atom systems. These blocks enable the entanglement of atoms in specific patterns, determined by a predefined connectivity graph. The primary quantum operation utilized my be derived from the Rydberg Hamiltonian, facilitating the convolution of input data through the system.

<u>Feature Extraction via Quantum Entanglement</u>: By entangling atoms in various configurations, the method captures complex relationships and patterns within the image data, significantly enhancing the feature extraction process. Different configurations, including single and multiple circuit setups with varying kernel sizes (2x2 and 3x3), are experimented with to optimize the extraction process.

<u>Integration with Classical Machine Learning</u>: After quantum processing, the method involves measuring the expected value of an observable for each qubit, translating these quantum measurements into classical information. This information is then used to create new images, which are subsequently flattened in certain embodiments and fed into a, for example, classical dense neural network. This network includes two fully connected hidden layers, allowing for the integration of quantum-processed data with traditional machine learning architectures.

<u>Computational Experiments run on neutral atom quantum simulator:</u>

Different experiments have been performed over the same data set (breast MedMNIST), changing the size of the kernel, the quantum circuits used (as can be seen in Figure 1, more than a single circuit can be used to extract different information) and the number of resulting images obtained in the quantum preprocessor (as many as qubits are measured).

<u>The different cases are described below:</u>

1. 2x2 kernel size, using a single circuit (King's circuit), measuring all qubits (4 resultant images).
2. 2x2 kernel size, using 4 different circuits, measuring all qubits (16 resultant images, 4 in each circuit).
3. 2x2 kernel size, using 4 different circuits, measuring a single qubit in each circuit (4 resultant images).
4. 3x3 kernel size, using a single circuit (King's circuit), measuring all qubits (9 resultant images).
5. 3x3 kernel size, using 4 different circuits, measuring all qubits (36 resultant images, 9 in each circuit).
6. 3x3 kernel size, using 4 different circuits, measuring a single qubit in each circuit (4 resultant images).

The following explains the particular case of the 2x2 kernel size, using a single circuit (King's circuit), measuring all qubits (4 resultant images).

Hyperparameters and layers: The kernel size employed was 2x2 (corresponding to 4 qubits in the case of the quantum layer). The pixel values traverse through the digital-analog quantum circuit, and the expected value of an observable in each qubit (channel) is individually measured. These values are then stored in new images (4 new images, as 4 qubits were measured, as showed in Figure 2). Subsequently, these 4 new images are flattened and passed through a classical dense neural network with two fully connected hidden layers. The classical counterpart contains the same configuration, except that a classical convolutional layer is applied in the raw image instead of a quantum one.

The digital-analog blocks considered in this experiment were the native blocks of neutral atom systems by companies such as PASQAL and QuEra. As depicted in Figure 1, pixels from the original input image need to be encoded in the circuit through digital operations with individual control over the atoms, which is an anticipated feature in the upcoming generations of neutral atom quantum computers. Subsequently, digital-analog blocks are applied to perform the convolution of the input data. In this experiment, a configuration was considered where atoms are entangled in a circular manner, with the connectivity map given by a graph G = {(0,1), (1,2), (2,3), (3,0)}. The unitary operation used as the digital-analog block was given by

$$U(\tau) = e^{-i \int_0^\tau H_{ryd}(t)dt},$$

which can be derived from the Rydberg Hamiltonian, given by

$$H_{ryd} = \frac{\Omega(t)}{2}\left(\cos\phi(t)\sum_i \sigma_i^x - \sin\phi(t)\sum_i \sigma_i^y\right) - \Delta(t)\sum_i \eta_i + \sum_{<ij>} J_{ij}\eta_i\eta_j.$$

Model performance: To assess the method's performance and compare it with the results of a public benchmark, the evaluated metrics included AUC (Area Under the ROC Curve) and test accuracy (ACC). Figure 3 illustrates the ROC curve, and Table 1 presents the model performances. It can be observed that the method of the invention using a digital-analog quantum layer outperforms the values obtained from a benchmark available on the MedMNIST website.

Table 1

| Model | AUC | ACC |
|---|---|---|
| Digital-analog quantum CNN | 0.919 | 0.872 |
| Classical CNN | 0.831 | 0.871 |

While the test accuracy is similar between the quantum model of the invention and its classical counterpart, the quantum model significantly outperforms in terms of AUC. AUC is a more reliable metric for unbalanced data, because it takes into account both true positive and false positive rates. In unbalanced datasets, where one class may be much more prevalent than the other, accuracy can be misleading as a classifier that simply predicts the majority class may appear to have high accuracy. AUC, on the other hand, assesses the method's ability to distinguish between classes, even in imbalanced situations, making it a more robust and informative metric in such circumstances.

The Table 2 displays the best ACC and AUC results following a search for optimal hyperparameters, employing a known grid search technique. The hyperparameters considered in the search included: activation function, learning rate, and dropout.

Table 2

| Model | AUC | ACC |
|---|---|---|
| 2x2 kernel, single circuit, measuring all qubits | 0.909 | 0.891 |
| 2x2 kernel, 4 circuits, measuring all qubits | 0.919 | 0.872 |
| 2x2 kernel, 4 circuits, measuring a single qubit | 0.921 | 0.858 |
| 3x3 kernel, single circuit, measuring all qubits | 0.912 | 0.878 |
| 3x3 kernel, 4 circuits, measuring all qubits | **0.927** | 0.877 |
| 3x3 kernel, 4 circuits, measuring a single qubit | 0.902 | 0.853 |

The results of the best digital-analog quantum CNN are also compared with the bench marking of the best current models (Table 3).

Table 3

| Model | AUC | ACC |
|---|---|---|
| Digital-analog quantum CNN | **0.927** | **0.877** |
| ResNet-18 (28) | 0.901 | 0.863 |
| ResNet-18 (224) | 0.891 | 0.833 |
| ResNet-50 (28) | 0.857 | 0.812 |
| ResNet-50 (224) | 0.866 | 0.842 |
| Auto-sklearn | 0.836 | 0.803 |
| AutoKeras | 0.871 | 0.831 |
| Google AutoML Vision | 0.919 | 0.861 |

Claims

1.  A computer-implemented method for image classification using a quantum computer comprising a quantum processing unit (QPU) with a plurality of qubits and a central processing unit (CPU), the method comprising:

    - Encoding an input image into digital, single-qubit blocks in the QPU of the quantum computer, wherein each pixel of an input image is encoded into a single qubit from the plurality of qubits;
    - Using analog blocks provided by the QPU of the quantum computer (as native) to create entanglement among the qubits;

- Generating a new image from the input image, comprising

a) using single or multiple digital analog quantum kernels (DAQK) to generate a convolved image, in particular wherein multiple DAQK are created by varying the topologies of the entangled qubits, and
b) measuring an observable of each qubit of the plurality of entangled qubits and computing an expectation value from the measured observables which is encoded into pixels of the new image; and

- Classifying the input image by providing the new image as input to a classical Convolution Neural Network.

2. The method of claim 1, comprising training the classical Convolutional Neural Network with a training set of images wherein the training images are convolved using DAQKs.

3. The method of claim 2, wherein convolving the training images using DAQKs comprises the steps of:

a. Performing a quantum convolution using a digital-analog quantum kernel on images from the training set;
b. Measuring the quantum state of a quantum circuit of each qubit to obtain an observable value, in particular a single-body observable value;
c. Obtaining an expectation value of a single-body observable;
d. Encoding the expectation values obtained from the measured qubits into new pixels to generate new images; and
e. Optionally, applying more than one quantum circuit by varying the topology of entanglement of the qubits.

4. The method of any of claims 1 to 3, wherein the analog blocks include multi-qubit interactions native to the quantum processing unit (QPU).

5. The method of any of claims 1 to 4, wherein the digital, single-qubit blocks are generated using electromagnetic pulses.

6. The method of any of claims 1 to 5, wherein a quantum digital block, in particular given by a single-qubit rotation and/or analog block is implemented over a kernel size of nxn, wherein n is the number of rows or column of the kernel and corresponding to the number of qubits in a quantum layer is nxn.

7. The method of any of claims 1 to 6, comprising:

- convolving a portion of the input image in the form of input pixels in the quantum computer by applying at least one convolving layer of the pixels to subgroups of the plurality of input qubits, wherein the size of each subgroup of the plurality of input qubits is equal to the number of pixels of the image portion; and
- performing a measurement of the state of at least some of the input qubits on which a digital analog quantum convolutional layer measurement has not been performed.

8. The method of any of claims 1 to 7, wherein the variation of the topologies of the entangled qubits is performed by changing a connectivity pattern between the qubits within the analog block, while the digital block remains the same.

9. The method of claim 1 to 8, wherein the quantum computer uses neutral atoms, trapped ions, superconducting circuits and/or photons.

10. A data processing system comprising means for carrying out the method of any of claims 1 to 8, in particular comprising:

- A quantum processing unit (QPU) configured to implement digital-analog quantum convolutions whose analog part is native to a quantum computer used;
- A memory storing instructions for applying a quantum operation derived from a Rydberg Hamiltonian to images;
- A classical processor configured to receive quantum measurement data and integrate it with a classical convolutional neural network for image classification; and
- An output interface configured to display classification results based on the quantum-processed images.

11. The system of claim 10, wherein the digital-analog blocks are configured for entanglement patterns that enhance the convolution of input data for feature extraction.

12. A computer program [product] comprising instructions which, when the program is executed by a computer, cause the computer to carry out the method of any of claims 1 to 9.

13. A computer-readable medium comprising instructions which, when executed by a computer, cause the computer to carry out the method of any of claims 1 to 9.

14. Use of the method of any of claims 1 to 9 for classifying a medical input image as showing a malignant cancer or not.

15. Use of a plurality of quantum generated images, in particular as described in claim 1, for training a classical Convolutional Neural Network (CNN) for image classification.

**Figure 1**

**Figure 2**

**Figure 3**

ROC curve for breast medmnist

**Figure 4**

Europäisches
Patentamt

European
Patent Office

Office européen
des brevets

# EUROPEAN SEARCH REPORT

**Application Number**

EP 24 17 1385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAXWELL HENDERSON ET AL: "Quanvolutional Neural Networks: Powering Image Recognition with Quantum Circuits", ARXIV.ORG, CORNELL UNIVERSITY LIBRARY, 201 OLIN LIBRARY CORNELL UNIVERSITY ITHACA, NY 14853, 9 April 2019 (2019-04-09), XP081167154, * page 1 - page 6; figure 1 * | 1-15 | INV. G06N3/0464 G06N3/084 G06N10/60 G06V10/36 |
| A | MATIC ANDREA ET AL: "Quantum-classical convolutional neural networks in radiological image classification", 2022 IEEE INTERNATIONAL CONFERENCE ON QUANTUM COMPUTING AND ENGINEERING (QCE), IEEE, 18 September 2022 (2022-09-18), pages 56-66, XP034231965, DOI: 10.1109/QCE53715.2022.00024 [retrieved on 2022-11-22] * abstract; figures 2-5 * * 1. Introduction * * III.B. Details of the QCCNNs * | 1-15 | |
| | | | **TECHNICAL FIELDS SEARCHED (IPC)** |
| A | ESSAM H HOUSSEIN ET AL: "Hybrid quantum convolutional neural networks model for COVID-19 prediction using chest X-Ray images", ARXIV.ORG, CORNELL UNIVERSITY LIBRARY, 201 OLIN LIBRARY CORNELL UNIVERSITY ITHACA, NY 14853, 8 February 2021 (2021-02-08), XP081884479, * abstract; figures 2,3 * | 1-15 | G06N G06V |

-/--

The present search report has been drawn up for all claims

| Place of search | Date of completion of the search | Examiner |
|---|---|---|
| The Hague | 7 October 2024 | De Meyer, Arnaud |

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br>EP 24 17 1385 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | ANTON SIMEN ET AL: "Digital-analog quantum convolutional neural networks for image classification",<br>ARXIV.ORG, CORNELL UNIVERSITY LIBRARY, 201 OLIN LIBRARY CORNELL UNIVERSITY ITHACA, NY 14853,<br>1 May 2024 (2024-05-01), XP091744353,<br>* abstract; figure 1 *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 7 October 2024 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)